# EUROPÄISCHE PATENTSCHRIFT

(11) **EP 0 990 984 B1**
(45) Veröffentlichungstag und Bekanntmachung des Hinweises auf die Patenterteilung: **08.03.2006**
(21) Anmeldenummer: 99125040.8
(22) Anmeldetag: 15.12.1999
(51) Int. Cl.: G06F 9/46, G06F 9/44

(54) **Verfahren zum Vermitteln von Prozessdaten sowie Verfahren zum Erstellen von anwenderspezifischen Daten und mit diesem Verfahren erstellte Daten**
Method for transmitting process data, and method for generating user-specific data and data generated by this process
Méthode de transmission de données de processus, et méthode de génération de données spécifiques d'un utilisateur et de données générées par cette méthode

(43) Veröffentlichungstag der Anmeldung: 05.04.2000
(73) Patentinhaber: Galilei Software GmbH, 82041 Oberhaching (DE)
(72) Erfinder: Hammelbacher, Stephan, 82041 Oberhaching (DE)
(74) Vertreter: Schaumburg, Thoenes, Thurn, Landskron

(56) Entgegenhaltungen:
- WO-A-98/52320
- WO-A-99/22332

## Beschreibung

Die Erfindung betrifft ein Verfahren, bei dem ein im Speicher eines Programmrechners gespeichertes Programm durch mindestens einen Prozessor in einem Prozeß ausgeführt wird, der mit Hilfe eines Prozeßdatums von anderen durch den Prozessor ausgeführten Prozessen unterscheidbar ist. Unter Einbeziehung des Prozeßdatums werden in Zusammenhang mit der Ausführung des Programms stehende Daten zwischen dem Rechner und einer ersten Schnittstelle zur Datenein- und/oder Datenausgabe übertragen.

Ein derartiges Verfahren läßt sich beispielsweise mit Hilfe von Programmkomponenten der Firma CITRIX bzw. der Firma Microsoft GmbH (Windows 2000) durchführen. Die Programmkomponenten sind im Internet unter der Adresse www.citrix.com verfügbar. Zur Demonstration wird unter dieser Adresse die Fernnutzung des Programms WORD der Firma MICROSOFT GmbH angeboten. Der Anwender hat die Möglichkeit, mit WORD zu schreiben und die geschriebenen Daten auf einen Datenträger in seinem Rechner zu speichern oder von seinem lokalen Drucker auszudrucken. Während der Ausführung von WORD erhält der Anwender im fernen Programmrechner Speicherplatz und eine Prozeßnummer. Die Programmkomponenten der Firma CITRIX bieten außerdem die Möglichkeit, die zum Anwender hin übertragenen Ausgaben bzw. die vom Anwender eingegebenen Eingaben auch zu einer weiteren Schnittstelle für die Datenein- oder Datenausgabe zu übertragen. Dieses Verfahren wird Spiegeln genannt. Für das Spiegeln muß die dem Anwender zugeordnete Prozeßnummer in einem weiteren Fernrechner bekannt sein. Um die Prozeßnummer zu erfahren, muß die Bedienperson des Fernrechners die Vorgänge im Programmrechner überwachen und neue Prozesse selbst registrieren.

Ferner ist aus dem Dokument WO-A-98/52320 ein Verfahren zum Vermitteln von Prozessdaten bekannt, bei dem in einem Rechner ein Programm durch einen Prozessor in einem Prozess ausgeführt wird und in Zusammenhang mit der Ausführung des Programms stehende Daten zwischen dem Rechner und einer Schnittstelle übertragen werden.

Es ist Aufgabe der Erfindung, das eingangs genannte Verfahren so zu verändern, daß sich zusätzliche Anwendungsmöglichkeiten ergeben.

Diese Aufgabe wird durch ein Verfahren mit den im Patentanspruch 1 angegebenen Verfahrensschritten gelöst. Weiterbildungen sind in den Unteransprüchen angegeben.

Die Erfindung geht von der Überlegung aus, daß sich neue Anwendungsmöglichkeiten im Zusammenhang mit dem Spiegeln ergeben, wenn ein im Programmrechner ausgeführter Prozeß weitervermittelt werden kann. Eine einfache Möglichkeit für eine solche Weitervermittlung besteht darin, daß von der ersten Schnittstelle aus veranlaßt wird, daß das Prozeßdatum oder Daten zum Ermitteln des Prozeßdatums zu einer zweiten Schnittstelle übertragen werden. Mit Hilfe des Prozeßdatums werden dann im Zusammenhang mit der Ausführung des Programms im Programmrechner stehende Daten zwischen dem Programmrechner und der zweiten Schnittstelle übertragen.

Durch die von der ersten Schnittstelle aus veranlaßte Übertragung wird erreicht, daß zum einen der Zeitpunkt für das Vermitteln des Prozesses durch eine Bedienperson der ersten Schnittstelle festgelegt werden kann. Außerdem kann die zweite Schnittstelle von der Bedienperson der ersten Schnittstelle aus frei gewählt werden. Durch diese Vorgehensweise ist es möglich, einen Prozeß auf einem Programmrechner ähnlich wie ein Telefongespräch zu beliebigen Zeiten und zu beliebigen Zielen zu vermitteln.

Bei einer Weiterbildung des erfindungsgemäßen Verfahrens ist das Programm ein Programm, das von einem Anwender von der ersten Schnittstelle aus genutzt wird. Beispielsweise können Anwendungsprogramme oder Betriebssysteme ferngenutzt werden. Entstehen bei der Ausführung des Programms durch den Anwender Fragen, so hat der Anwender die Möglichkeit bei einer Anfrage an den Hersteller des Programms zusätzlich das Übertragen des Prozeßdatums an den Hersteller zu veranlassen. Entweder kennt der Anwender das Prozeßdatum oder er kann die Übertragung des Prozeßdatums automatisch von seiner Schnittstelle aus veranlassen. Mit Hilfe des Prozeßdatums lassen sich die im Zusammenhang mit der Ausführung des Programms stehenden Daten auch zur zweiten Schnittstelle übertragen, d.h. zur Schnittstelle des Herstellers. Der Hersteller kann den Anwender bei der Beantwortung seiner Fragen so besser als bisher unterstützen.

Bei einer alternativen Weiterbildung ist das Programm ein Programm, das von einem Anwender von einer Anwenderschnittstelle aus gesteuert wird. Somit sind drei Schnittstellen an dem Verfahren beteiligt, nämlich die erste Schnittstelle, die zweite Schnittstelle und die Anwenderschnittstelle. Das Übertragen des Prozeßdatums oder der Daten zum Ermitteln des Prozeßdatums wird von der ersten Schnittstelle aus veranlaßt, also von einer anderen Schnittstelle als der Anwenderschnittstelle. Neben der Anwenderschnittstelle und einer Schnittstelle eines Herstellers lassen sich so Schnittstellen Dritter in das Verfahren einbeziehen. Beispielsweise ist die erste Schnittstelle eine Schnittstelle, von der aus die Prozesse an verschiedene Hersteller vermittelt werden. Die erste Schnittstelle ist somit eine Schaltzentrale, von der aus die Prozesse an eine Vielzahl von Rechnern vermittelt werden.

Ein solches Vorgehen ermöglicht es beispielsweise Herstellern zunächst einen Dienstleister an der ersten Schnittstelle einzusetzen, der einfache Probleme selbst löst. Erst wenn Spezialwissen erforderlich ist, erfolgt die Vermittlung zum Hersteller. Andererseits ist der Diensterbringer für eine Vielzahl von Herstellern tätig, so daß die von ihm betriebene Rechentechnik gut ausgelastet ist.

Die erste Schnittstelle, die zweite Schnittstelle und/oder die dritte Schnittstelle sind bei Weiterbildungen in Fernrechnern enthalten, die mit dem Programmrechner über ein Datenübertragungsnetz verbunden sind. Im Gegensatz zu einem direkten Anschluß der Schnittstellen an den Anwenderrechner, z.B. als Terminals, gestattet es ein Datenübertragungsnetz die Schnittstellen weit vom Programmrechner aus aufzustellen. Das Vermitteln kann so nicht nur innerhalb eines Gebäudes sondern weltweit ausgeführt werden.

Bei einer anderen Weiterbildung werden zur ersten Schnittstelle und/oder zur zweiten Schnittstelle die gleichen Daten übertragen, wie zwischen dem Programmrechner und der vom Anwender genutzten Schnittstelle. Die auf dem Bildschirm bzw. auf anderen Ausgabegeräten des Anwenders ausgegebenen Daten werden auch auf der ersten Schnittstelle und/oder auf der zweiten Schnittstelle ausgegeben, d.h. gespiegelt. Umgekehrt ist an der ersten Schnittstelle und der zweiten Schnittstelle auch sichtbar, welche Daten der Anwender angibt.

Bei einer nächsten Weiterbildung wird das Prozeßdatum zur ersten Schnittstelle übermittelt. Anschließend wird das übermittelte Prozeßdatum von der ersten Schnittstelle zur zweiten Schnittstelle übermittelt. Die Übermittlung des Prozeßdatums an die erste Schnittstelle ist eine einfache Möglichkeit, um von der ersten Schnittstelle aus die Übertragung des Prozeßdatums zu veranlassen. Das Prozeßdatum ist nämlich in der ersten Schnittstelle für den weiteren Vermittlungsvorgang verfügbar.

Bei einer Ausgestaltung wird das Prozeßdatum über ein Datenübertragungsnetz oder über ein Fernsprechnetz übermittelt. Das Datenübertragungsnetz ist beispielsweise das gleiche Datenübertragungsnetz über das die Fernrechner mit den Schnittstellen an den Programmrechner angeschlossen sind. Beispielsweise wird als Datenübertragungsnetz das Internet verwendet. Durch den Einsatz neuester Mailtechnologien und neuester Programmiersprachen, beispielsweise der Programmiersprache JAVA, läßt sich die Übertragung des Prozeßdatums auf einfache Weise durchführen. Eine Übermittlung über das Fernsprechnetz wird gewählt, wenn zusätzlich zum Prozeßdatum noch weitere Daten übermittelt werden sollen, die sich schneller mündlich übermitteln lassen.

Bei einer Weiterbildung gibt der Anwender in einer mehrere Wochen, mehrere Monate oder sogar mehrere Jahre dauernden Startphase umfangreiche anwenderspezifische Programmteile des Programms oder Teile einer für die Nutzung des Programms erforderlichen umfangreichen anwenderspezifischen Datenbank ein, ohne daß er uneingeschränkten Zugriff auf die Befehle des Anwendungsprogramms hat. Die bestimmungsgemäße Benutzung des Programms ist erst nach der Startphase möglich. Erst nach Abschluß der Startphase erhält der Anwender uneingeschränkten Zugriff auf die Befehle des Anwendungsprogramms. Bei dieser Weiterbildung wird davon ausgegangen, daß während der Startphase häufig eine Vermittlung des Prozesses erforderlich ist, in welchem die Eingabe der anwenderspezifischen Programmteile bzw. der anwenderspezifischen Datenbank erfolgt. Es treten nämlich bei der Anpassung sehr viele Fragen auf, die entweder bereits durch einen Dienstleister ohne Spezialwissen oder nur durch den Hersteller des Programms, d.h. mit Spezialwissen, beantwortet werden können.

Bei einer vorteilhaften Weiterbildung der Erfindung wird das Programm als ein Anwendungsprogramm im Speicher eines Rechners gespeichert. Ein Anwender nutzt Funktionen des Anwendungsprogramms von einem entfernten Dienstnutzungsrechner aus über ein Datenübertragungsnetz. Der Anwender gibt in einer Startphase anwenderspezifische Programmteile des Anwendungsprogramms oder eine für die Nutzung des Programms erforderliche anwenderspezifische Datenbank ein, ohne dass er uneingeschränkten Zugriff auf die Befehle des Programms hat. Nach Abschluss der Startphase erhält der Anmelder uneingeschränkten Zugriff auf die Befehle des Anwendungsprogramms.

Ein derartiges Verfahren läßt sich beispielsweise mit Hilfe von Programmkomponenten der Firma Microsoft GmbH, CITRIX oder Netmanage durchführen. Die Programmkomponenten sind im Internet unter der Adresse www.citrix.com verfügbar. Zur Demonstration wird unter dieser Adresse die Fernnutzung des Programms WORD der Firma MICROSOFT GmbH angeboten. Der Anwender hat die Möglichkeit, mit WORD zu schreiben und die geschriebenen Daten auf einen Datenträger in seinem Rechner zu speichern oder an seinem lokalen Drucker auszudrucken. Das Anwendungsprogramm selbst muß vom Anwender nicht erworben werden. Nachteilig ist jedoch die Benutzung des nicht immer kostenfrei nutzbaren Datenübertragungsnetzes.

Bei vielen Anwendungsprogrammen ist vor der bestimmungsgemäßen Nutzung des Programms durch den Anwender eine umfangreiche Anpassung des Programms an die Anforderungen des Anwenders und/oder das Eingeben einer Vielzahl von anwenderspezifischen Daten in eine Datenbank erforderlich. Es sind Verfahren zum Erstellen der anwenderspezifischen Daten bekannt, bei denen der Anwender zunächst einen Rechner und das zugehörige Anwendungsprogramm beschaffen oder das Programm in einem Rechenzentrum betreiben muß. Anschließend beginnt er mit dem Anpassen der anwenderspezifischen Daten. Beim Anpassen muß der Anwender häufig vom Hersteller des Anwendungsprogramms unterstützt werden. Diese Startphase erstreckt sich oft über mehrere Wochen oder mehrere Monate, in Ausnahmefällen sogar über einige Jahre, d.h. es sind mehrere Mannmonate bzw. Mannjahre erforderlich. Insbesondere bei betriebswirtschaftlichen Programmen oder Programmen zur Unterstützung des Managements sind aufwendige Anpassungen an den jeweiligen Anwender erforderlich, da sich die einzelnen Unternehmen in ihrer Struktur unterscheiden.

Der Aufwand für den Anwender kann beim Erstellen der anwenderspezifischen Daten nur dann verringert werden, wenn die Erneuerungsrate auf dem Gebiet der Computertechnik und Netzwerktechnik berücksichtigt wird. Das Maß der Erneuerungsrate zeigt sich darin, daß als Standardrechner zu bezeichnende Rechner von Jahr zu Jahr beispielsweise einen doppelt so großen Arbeitsspeicher und eine etwa doppelt so hohe Arbeitsgeschwindigkeit haben wie noch im Jahr zuvor. Außerdem veralten die Rechner schnell, weil neue Technologien zum Einsatz kommen, z.B. neue Bussysteme oder das Internet.

Deshalb gibt der Anwender bei dieser vorteilhaften Weiterbildung des erfindungsgemäßen Verfahrens in einer Startphase anwenderspezifische Programmteile des Anwendungsprogramms oder eine für die Nutzung des Programms erforderliche anwenderspezifische Datenbank ein. In der Startphase hat der Anwender keinen uneingeschränkten Zugriff auf die Befehle des Anwendungsprogramms und/oder die Datenbank. Das bedeutet beispielsweise, daß er das Programm oder Programmteile, die nicht anwenderspezifisch sind, sowie die Datenbank nicht kopieren und/oder archivieren kann. Kopieren bedeutet das Verdoppeln von Daten für die aktive Nutzung. Archivieren ist das Verdoppeln von Daten für die Aufbewahrung. Eine Benutzung der archivierten Daten erfolgt nur bei Datenverlusten. Erst nach Abschluß der Startphase erhält der Anwender uneingeschränkten Zugriff auf die Befehle des Anwendungsprogramms. Erst nach Abschluß der Startphase werden bei einer Ausführungsform das Programm und vorzugsweise auch die anwenderspezifischen Daten an den Anwender übermittelt. Diese Vorgehensweise erlaubt es, den Zeitpunkt hinauszuschieben, zu dem der Anwender das Programm erwerben muß. Außerdem kann er oftmals den Zeitpunkt zum Erwerben eines neuen Rechners hinausschieben, weil zur Anpassung auch ein älterer Rechner und ein handelsüblicher Browser genügt.

Durch den Einsatz des erfindungsgemäßen Verfahrens kann der Anwender noch in der Startphase, d.h. vor dem Erwerb des Anwendungsprogramms und vor dem Erwerb dazugehöriger Rechentechnik entscheiden, ob das Anwendungsprogramm seinen Zwecken genügt. Der Aufwand bei der Einführung eines Programms sinkt durch die Anwendung des erfindungsgemäßen Verfahrens erheblich.

Während der Startphase werden die vom Anwender durchgeführten Anpassungen gespeichert. Bei einer Unterbrechung der Startphase läßt sich die Anpassung an dem Stand fortsetzen, den sie vor der Unterbrechung hatte.

Bei einer Alternative sind die anwenderspezifischen Daten Teile einer vom Anwendungsprogramm benutzten Datenbank. Die Datenbank enthält vom Anwender eingegebene Daten. Alternativ oder zusätzlich sind die anwenderspezifischen Daten Teile der Befehlsfolge des Anwendungsprogramms. Beispielsweise werden die anwenderspezifischen Daten vom Hersteller vor der Übermittlung des Anwendungsprogramms an den Anwender in die Befehlsfolge des Anwendungsprogramms eingebunden.

Wird nach Abschluß der Startphase das Programm einschließlich der anwenderspezifischen Daten an den Anwender oder einen Anbieter von Rechenzentrumsleitung übermittelt, z.B. über das Datenübertragungsnetz oder mit Hilfe eines optischen oder magnetischen Datenträgers, so hat der Anwender die Möglichkeit, das Programm und die anwenderspezifischen Daten auf seinen eigenen Rechnern zu installieren. Dies erlaubt die Nutzung in einem eigenen Datenübertragungsnetz. Außerdem lassen sich die anwenderspezifischen Daten um Daten erweitern, auf die Dritte keinen Zugriff haben sollen. Es gibt jedoch auch andere Methoden, um dem Anwender den uneingeschränkten Zugriff auf das Programm zu ermöglichen. Beispielsweise kann er bei der Nutzung des Programms über ein Datenübertragungsnetz erweiterte Zugriffsrechte erhalten, die es ihm beispielsweise ermöglichen, das Programm für seine Zwecke zu vervielfältigen, z.B. über ein sogenanntes Download.

Bei einer Weiterbildung wird die Fernnutzung der Funktionen des Anwendungsprogramms durch den Anwender auf einem Rechner eines Diensterbringers oder auf einem Rechner des Herstellers des Programms angezeigt. Der vom Diensterbringer angebotene Dienst ist die Fernnutzung des Anwendungsprogramms. Zur Fernnutzung gehören insbesondere Eingaben des Anwenders und Ausgaben des Anwendungsprogramms für den Anwender, die auf einem Bildschirm auf dem entfernten Dienstnutzungsrechner oder auf einem Datenspeicher des entfernten Dienstnutzungsrechners ausgegeben werden. Das Anzeigen der Fernnutzung auf einem dritten Rechner ist auch unter dem Namen "Spiegeln" bekannt. Das "Spiegeln" wird von den eingangs erwähnten Programmkomponenten der Firma CITRIX unterstützt. Der Diensterbringer oder der Hersteller "spiegeln" die Fernnutzung des Anwenders abhängig von ihrem Bedarf. Durch das "Spiegeln" wird erreicht, daß Anwender und Diensterbringer bzw. Anwender und Hersteller in derselben Entwicklungsumgebung arbeiten, denselben Datenbestand nutzen und gleiche Darstellungen auf ihren Anzeigeeinheiten haben. Dies erleichtert das Erstellen der anwenderspezifischen Daten erheblich, weil Fehler des Anwenders vom Hersteller einfach und frühzeitig erkannt werden können. Die Weiterbildung beruht auf der Erkenntnis, daß der Anpaßvorgang erheblich erleichtert wird, wenn zum einen für den Hersteller sichtbar ist, was der Anwender sieht und eingibt, und daß zum anderen Fehler ausgeschlossen werden, die auf unterschiedliche Rechner beim Anwender und beim Hersteller bzw. Diensterbringer zurückzuführen sind. Bei der Weiterbildung wird das Anwendungsprogramm nur auf einem Rechner ausgeführt. Zum Anwender bzw. zum Diensterbringer bzw. Hersteller werden nur die Ausgaben dieses Rechners übertragen. Der Hersteller kann Anfragen des Anwenders zu Fehlern schnell beantworten, weil er den Rechner genau kennt, auf dem das Anwendungsprogramm ausgeführt wird. Durch die Weiterbildung verringert sich sowohl der Aufwand für den Anwender als auch der Aufwand an Zeit und Personal des Diensterbringers bzw. Herstellers.

Bei einer Ausgestaltung werden zwischen dem Anwender und dem Diensterbringer bzw. zwischen dem Anwender und dem Hersteller Nachrichten ausgetauscht, welche die Nutzung der Funktionen und/oder das Anpassen unterstützen. Die Nachrichten werden beispielsweise über das Fernsprechnetz oder über das Datenübertragungsnetz ausgetauscht. Beispielsweise läßt sich eine Informationsbox nutzen, die die Nachrichten des jeweils anderen auf einer Anzeigeeinheit anzeigt. Das Austauschen von Nachrichten in Kombination mit dem "Spiegeln" gewährleistet eine besonders wirkungsvolle und einfache Unterstützung des Anwenders.

Bei einer Weiterbildung wird von der Erkenntnis ausgegangen, daß bei der Einführung eines Programms der Anwender zunächst relativ einfache Fragen stellt, beispielsweise zum Verwendungszweck oder zu den Vorzügen des Programms im Vergleich zu anderen Programmen für den gleichen Verwendungszweck. Nach diesen einfachen Fragen treten jedoch insbesondere während des Anpassens zunehmend Fragen auf, die nur mit Hilfe eines tieferen technischen Verständnisses für die Funktionsweise des Anwendungsprogramms beantwortet werden können. Der Aufwand für den Hersteller bei der Einführung eines Anwendungsprogramms läßt sich senken, wenn das Programm in zwei Phasen eingeführt wird. Deshalb wird bei der Weiterbildung zunächst eine Verbindung zur Übertragung der Nachrichten und/oder zum Anzeigen der Fernnutzung zwischen Anwender und Diensterbringer aufgebaut. Erst danach wird eine Verbindung zwischen Anwender und Hersteller hergestellt. Die Bedienperson des Rechners des Diensterbringers benötigt kein Spezialwissen zur Unterstützung des Anwenders. Nur die Bedienperson am Rechner des Herstellers hat Spezialwissen. Der Hersteller des Anwendungsprogramms hat im wesentlichen nur noch für die zweite Phase der Programmeinführung einen Aufwand. Es entsteht ein Verfahren, bei dem der Aufwand zur Einführung eines Programms sowohl auf der Anwenderseite als auch auf der Herstellerseite erheblich verringert wird.

Bei einer nächsten Weiterbildung vermittelt der Diensterbringer den Anwender an den Hersteller. Beim Vermitteln wird eine Prozeßnummer übergeben, mit deren Hilfe sich die vom Anwender genutzten Funktionen auf dem Rechner des Diensterbringers und/oder auf dem Rechner des Herstellers anzeigen lassen. Der Anwender wird beispielsweise über ein Fernsprechnetz oder über das Datenübertragungsnetz an den Hersteller vermittelt. Das Weitergeben der Prozeßnummer erlaubt es, den Hersteller in die Unterstützung des Anwenders einzubeziehen, ohne daß der Anwender die Benutzung des Anwendungsprogramms unterbrechen muß. Der Hersteller muß andererseits die Prozeßnummer nicht mit Hilfe eines aufwendigeren Verfahrens ermitteln.

Bei einer Weiterbildung des erfindungsgemäßen Verfahrens sind im Speicher des Rechners mit dem Anwendungsprogramm verschiedene Anwendungsprogramme gespeichert. Insbesondere auch von verschiedenen Herstellern. Durch diese Maßnahme lassen sich beispielsweise die Rechner des Diensterbringers, auf denen die Fernnutzung angezeigt wird, besser ausnutzen. Die Bedienpersonen benötigen auch bei der Weiterbildung kein Spezialwissen über die Anwendungsprogramme.

Die Erfindung betrifft außerdem anwenderspezifische Daten, die mit dem erfindungsgemäßen Verfahren bzw. mit dessen Weiterbildungen erstellt worden sind. Die anwenderspezifischen Daten sind beispielsweise Programmdaten oder Daten einer Datenbank. Die oben genannten technischen Wirkungen gelten auch für die anwenderspezifischen Daten.

Im folgenden werden Ausführungsbeispiele der Erfindung an Hand der beiliegenden Zeichnungen erläutert. Darin zeigen:
- Figur 1: ein Datenübertragungsnetz zur Fernnutzung von Anwendungsprogrammen,
- Figur 2: die Darstellung auf dem Bildschirm eines Dienstnutzungsrechners zu Beginn der Fernnutzung,
- Figur 3: eine Hierarchie zur Auswahl des Anwendungsprogramms,
- Figuren 4A und 4B: bei der Fernnutzung ausgeführte Verfahrensschritte,
- Figuren 5A und 5B: beim Erstellen von anwenderspezifischen Daten des Anwendungsprogramms ausgeführte Verfahrensschritte, und
- Figur 6: für die Auslieferung des Anwendungsprogramms auszuführende Verfahrensschritte.

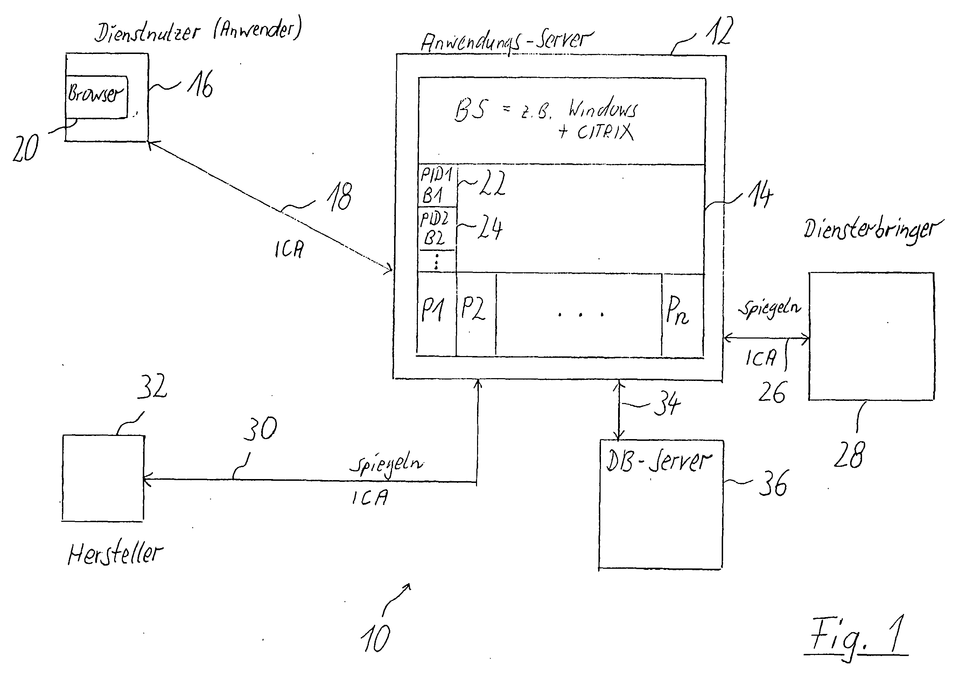

Figur 1 zeigt das Internet 10, das zur Fernnutzung von Anwenderprogrammen P1, P2 bis Pn dient, wobei n eine natürliche Zahl größer drei ist. Die Anwendungsprogramme P1 bis Pn sind auf einem Diensterbringungsrechner 12 gespeichert, der auch als Anwendungs-Server bezeichnet wird. Das Anwendungsprogramm P1 ist beispielsweise ein Programm für die Verwaltung in einem Krankenhaus. Um mit dem Anwendungsprogramm P1 arbeiten zu können, müssen die das zu verwaltende Krankenhaus betreffenden Angaben eingegeben werden, z.B. die Bettenzahl, die Anzahl der Operationsräume und Vorlagen für die im Krankenhaus verwendeten Formulare. Das Anwendungsprogramm P2 ist beispielsweise ein Management-Informationssystem. Das Anwendungsprogramm Pn ist ein betriebswirtschaftliches Programm, z.B. das Programm SAP.

Die Anwendungsprogramme P1 bis Pn sind in einer Speichereinheit 14 des Diensterbringungsrechners 12 gespeichert. In der Speichereinheit 14 befindet sich außerdem ein Betriebssystem BS, z.B. das Betriebssystem WINDOWS NT Terminal Server Edition der Firma MICROSOFT GmbH oder WINDOWS 2000. Das Betriebssystem BS enthält außerdem Programmkomponenten für die Fernnutzung der Anwendungsprogramme P1 bis Pn. Solche Komponenten werden im Internet z.B. unter der Adresse www.citrix.com von der Firma CITRIX angeboten. Die Programmkomponenten der Firma CITRIX ermöglichen eine Fernnutzung der Anwendungsprogramme P1 bis Pn von Dienstnutzungsrechnern aus, von denen in Figur 1 ein Dienstnutzungsrechner 16 dargestellt ist. Zwischen Dienstnutzungsrechner 16 und dem Diensterbringungsrechner 12 besteht eine Internetverbindung 18, auf der Daten gemäß Internetprotokoll TCP/IP (Transmission Control Protocol/Internet Protocol) übertragen werden. Auf der Seite des Dienstnutzungsrechners 16 wird ein handelsübliches Datensichtprogramm benötigt, mit dem Daten im Internet gesucht und dargestellt werden können. Das Datensichtprogramm 20 wird englisch auch als browser bezeichnet. Die Fernnutzung wird durch die Programmkomponenten der Firma CITRIX ermöglicht, wobei ein spezielles schmalbandiges Protokoll ICA (Independent computing Architecture) auf der Internetverbindung 18 verwendet wird. Bei einem anderen Ausführungsbeispiel werden Programmkomponenten eingesetzt, die unter der Internet-Adresse www.netmanage.com angeboten werden. Das Protokoll ICA ist sehr schmalbandig, weil zum Dienstnutzungsrechner 16 bei der Nutzung eines Anwendungsprogramms, z.B. des Anwendungsprogramms P1, nur Daten übertragen werden müssen, welche die Darstellung auf dem Bildschirm des Dienstnutzungsrechners 16 oder andere Ausgaben auf dem Dienstnutzungsrechner 16 betreffen. In der anderen Richtung, d.h. vom Dienstnutzungsrechner 16 zum Diensterbringungsrechner 12 müssen mit Hilfe des Protokolls ICA nur solche Daten übertragen werden, die Eingaben einer Bedienperson in den Dienstnutzungsrechner 16 betreffen.

Die Bedienperson des Dienstnutzungsrechners 16 ist der erste Benutzer B1 des Anwendungsprogramms P1. Bei der Benutzung des Anwendungsprogramms P1 durch den Benutzer B1 erzeugte Daten werden in der Speichereinheit 14 in einem Speicherbereich 22 gespeichert. Unter anderem wird dort eine Kennummer PID1 gespeichert, mit deren Hilfe die gemäß Protokoll ICA empfangenen Daten dem Benutzer B1 zugeordnet werden. Andererseits wird die Kennummer PID1 dazu genutzt, um Ausgabedaten gemäß Protokoll ICA an den Dienstnutzungsrechner 16 weiterzuleiten.

Für andere Benutzer des Anwendungsprogramms P1 gibt es in der Speichereinheit 14 ebenfalls eigene Speicherbereiche, von denen in Figur 1 ein Speicherbereich 24 für einen Benutzer B2 dargestellt ist, der eine Kennummer PID2 hat.

Über das Internet 10 wird außerdem eine Internetverbindung 26 zwischen dem Diensterbringungsrechner 12 und einem Rechner 28 hergestellt, der von einem Diensterbringer betrieben wird. Der Diensterbringer stellt die Fernnutzung der Anwendungsprogramme P1 bis Pn auf dem Diensterbringungsrechner 12 zur Verfügung. Auf der Internetverbindung 26 werden Daten gemäß Internetprotokoll TCP/IP sowie gemäß Protokoll ICA übertragen. Vom Rechner 28 aus lassen sich die Kennummern PID1, PID2 ermitteln. Die Programmkomponenten der Firma CITRIX ermöglichen in einem "Spiegeln" genannten Verfahren, daß bei Angabe der Kennummer PID1 die auf der Internetverbindung 18 übertragenen Daten ebenfalls auf der Internetverbindung 26 übertragen werden. Damit lassen sich auf einer Anzeigeeinheit des Rechners 28 die gleichen Informationen wie auf der Anzeigeeinheit des Dienstnutzungsrechners 16 darstellen.

Bei Bedarf wird über das Internet 10 eine Internetverbindung 30 zwischen dem Diensterbringungsrechner 12 und einem Rechner 32 aufgebaut, der vom Hersteller des Anwendungsprogramms P1 betrieben wird. Auf der Internetverbindung 30 werden Daten gemäß Internetprotokoll TCP/IP und gemäß Protokoll ICA übertragen. Wird einer Bedienperson des Rechners 32 die Kennummer PID1 von einer Bedienperson des Rechners 16 oder des Rechners 28 aus übermittelt, so lassen sich auch über die Internetverbindung 32 die auf der Internetverbindung 18 übertragenen Daten "spiegeln". Somit werden auch auf einer Anzeigeeinheit des Rechners 32 die auf der Anzeigeeinheit des Diensterbringungsrechners 16 angezeigten Daten dargestellt.

Bei Anwendungsprogrammen, bei denen eine umfangreiche Datenbank benutzt werden muß, sind die Speicherbereiche 22, 24 zu klein, so daß eine Internetverbindung 34 zwischen dem Diensterbringungsrechner 12 und einem Datenbank-Rechner 36 hergestellt wird. Auf der Internetverbindung 34 werden Daten gemäß Internetprotokoll TCP/IP übertragen. Außerdem wird für den Zugriff auf die jeweilige Datenbank eine Datenbanksprache verwendet, z.B. die Sprache SQL (Structured Query Language).

Bei einem anderen Ausführungsbeispiel befindet sich der WEB-Server auf einem anderen Rechner als dem Diensterbringungsrechner 12.

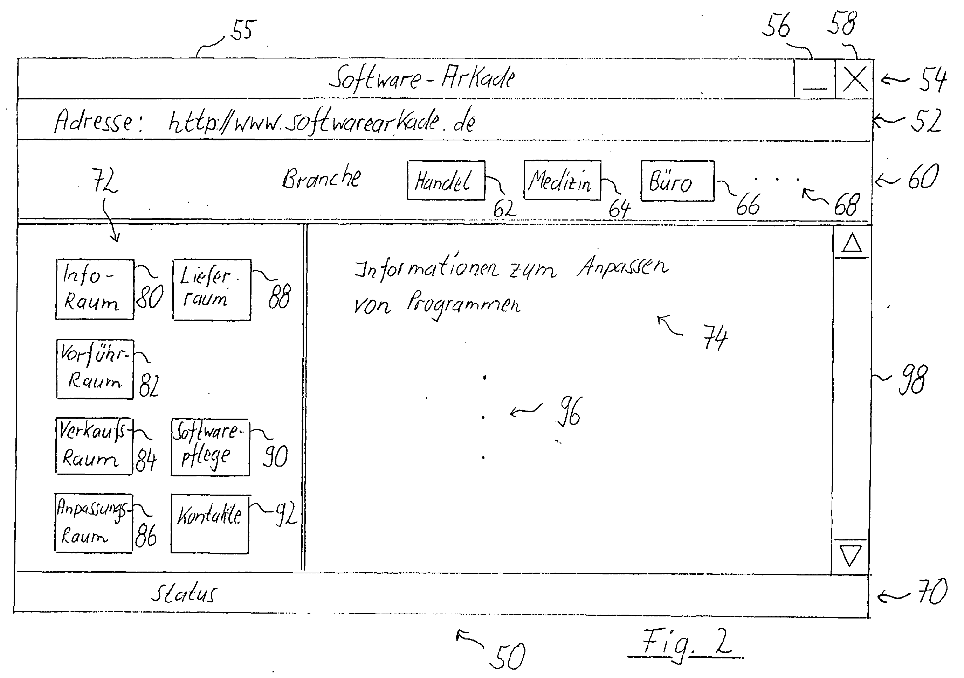

Figur 2 zeigt die Darstellung einer sogenannten WEB-Seite 50 auf der Anzeigeeinheit des Dienstnutzungsrechners 16, vgl. Figur 1. Die WEB-Seite 50 wird auf dem Dienstnutzungsrechner 16 dargestellt, nachdem die Bedienperson des Dienstnutzungsrechners 16 eine Internetverbindung zum Diensterbringungsrechner 12 aufgebaut hat. Der Diensterbringungsrechner 12 ist z.B. unter der Adresse http://www.softwarearkade.de erreichbar. Diese Adresse ist in einer Adreßleiste 52 der WEB-Seite 50 dargestellt. Über der Adreßleiste 52 befindet sich eine Titelleiste 54, in der in einem Titelfeld 55 als Titel "Software-Arkade" angegeben ist. Die Titelleiste 54 enthält außerdem ein Verkleinerungsfeld 56 zum Verkleinern der Darstellung der WEB-Seite 50 und ein Schließenfeld 58 zum Beenden der Darstellung der WEB-Seite 50 auf der Anzeigeeinheit.

Unterhalb der Adreßleiste 52 ist eine Branchenauswahlleiste 60 dargestellt, die Schaltflächen zur Auswahl verschiedener Branchen enthält. In Figur 2 sind Schaltflächen 62, 64 und 66 für die Branchen Handel, Medizin bzw. Büro dargestellt. Punkte 68 deuten Schaltflächen für weitere Branchen an.

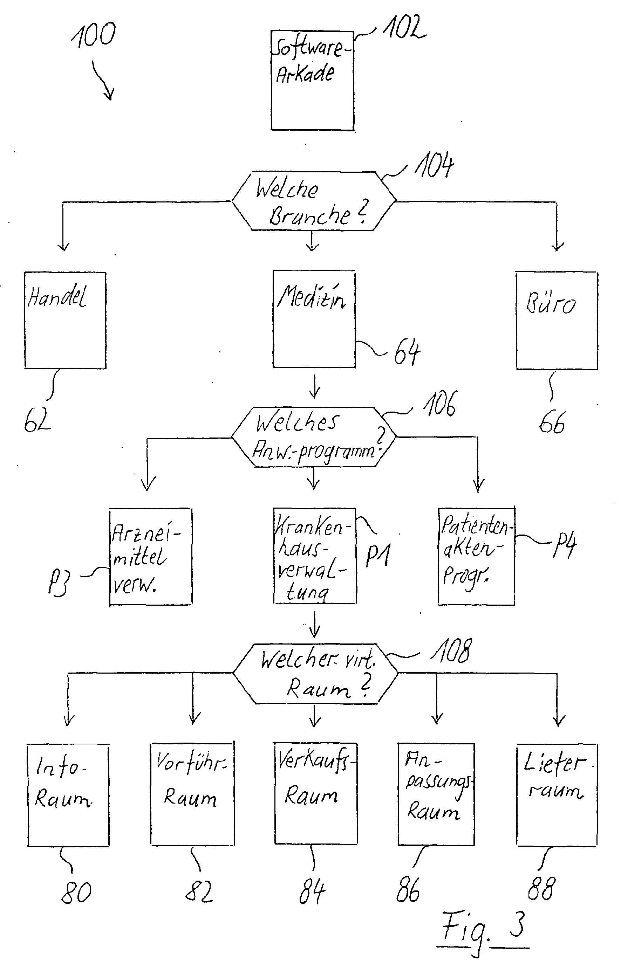

Am unteren Rand der Anzeigeeinheit wird eine Statusleiste 70 dargestellt, in welcher z.B. der jeweilige Verbindungszustand angezeigt wird. Zwischen Branchenauswahlleiste 60 und Statusleiste 70 befindet sich ein Raumauswahlfeld 72 sowie ein danebenliegendes Informationsfeld 74. Im Raumauswahlfeld 72 befinden sich Schaltflächen 80 bis 92, die in dieser Reihenfolge zur Auswahl eines Informationsraumes, eines Vorführraumes, eines Verkaufsraumes, eines Anpassungsraumes, eines Lieferraumes, eines Softwarepflegeraumes bzw. eines Kontaktraumes dienen. Die genannten Räume sind sogenannte virtuelle Räume, die nur auf der Anzeigeeinheit dargestellt werden. Die Schaltflächen 82 bis 90 lassen sich erst nach Auswahl eines Anwendungsprogramms P1 bis Pn mit Hilfe der Branchenleiste 60 oder der Schaltfläche 80 betätigen. Der Auswahlvorgang wird unten an Hand der Figur 3 erläutert. Der Inhalt der virtuellen Räume bezieht sich nach der Auswahl auf das ausgewählte Anwendungsprogramm P1 bis Pn, vgl. Figur 1.

Im Informationsfeld 74 werden Informationen zum Anpassen von Programmen dargestellt, die dem Dienstnutzer die Vorteile einer Fernnutzung und die auszuführenden Schritte erläutern. Punkte 96 deuten weitere Informationen im Informationsfeld 74 an, die durch Betätigen einer vertikalen Bildlaufleiste 98 am rechten Rand der Anzeigeeinheit dargestellt werden können.

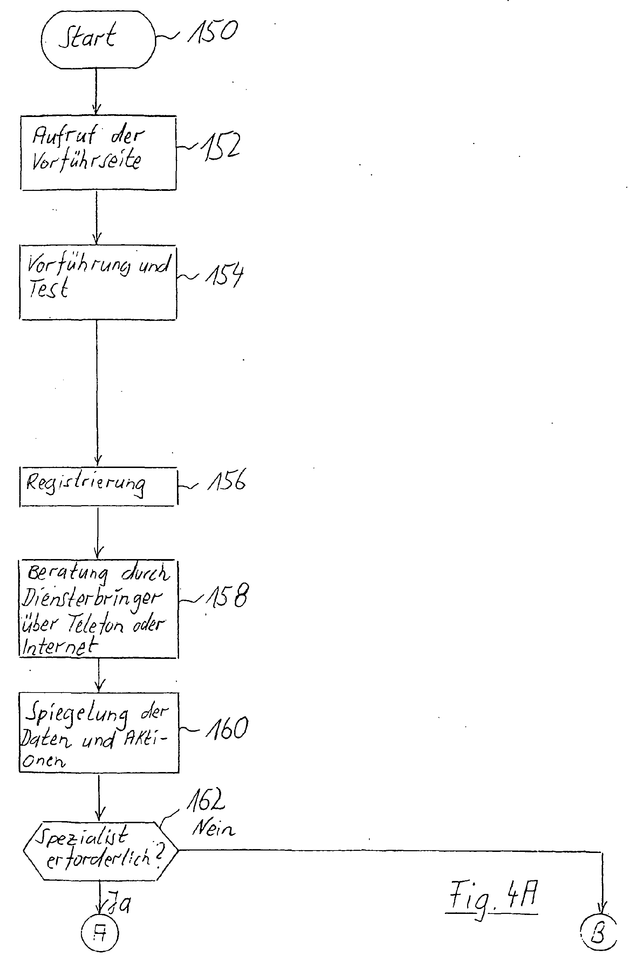

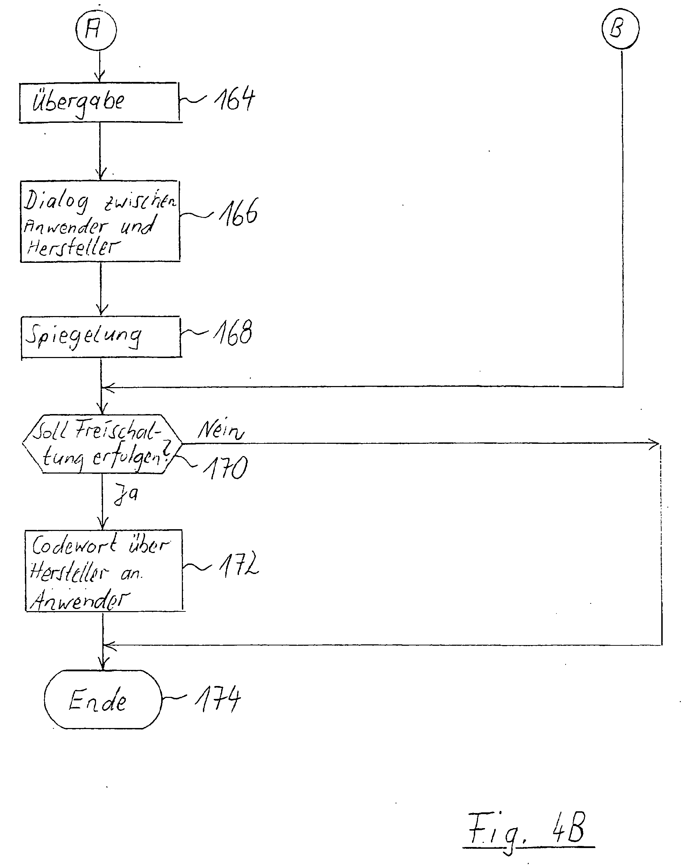

Beim Betätigen der Schaltfläche 80 für den virtuellen Informationsraum werden nach der Auswahl eines Anwendungsprogramms P1 bis Pn im Imformationsfeld 74 die Leistungsmerkmale des ausgewählten Anwendungsprogramms angezeigt. Betätigung der Benutzer die Schaltfläche 82 für den virtuellen Vorführraum, so kann das ausgewählte Anwendungsprogramm, z. B. das Anwendungsprogramm P1, genutzt werden. Dabei ist eine "Spiegelung" durch den Diensterbringer oder den Hersteller des Anwendungsprogramms möglich. Die dabei ausgeführten Verfahrensschritte werden unten an Hand der Figuren 4A und 4B erläutert.

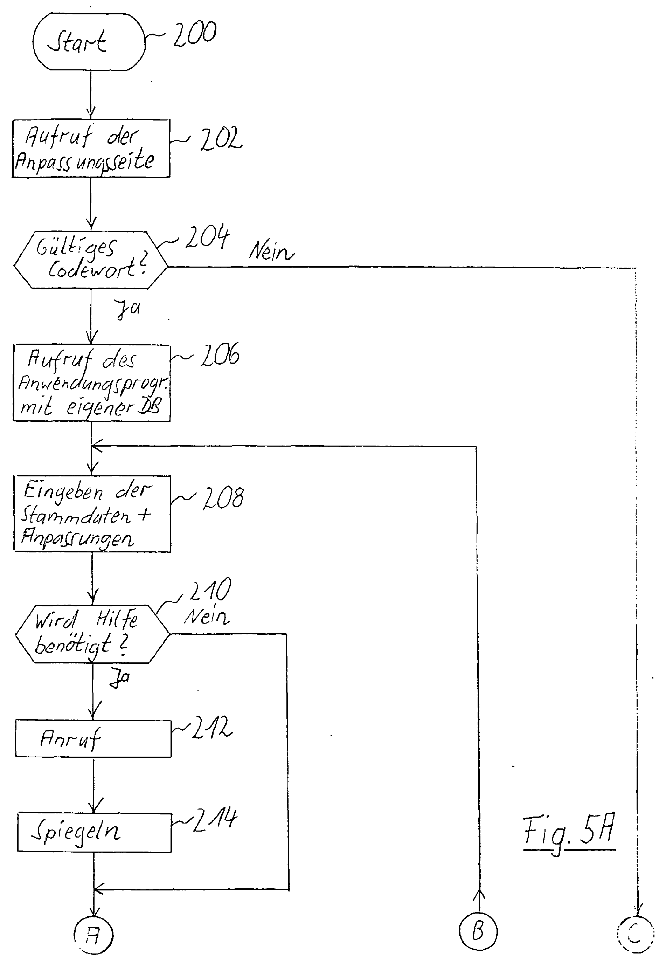

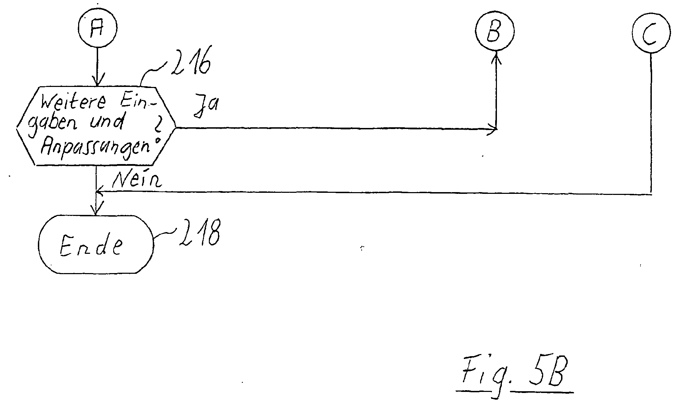

Wird die Schaltfläche 84 für den virtuellen Verkaufsraum betätigt, so werden Preise und Lieferbedingungen für das ausgewählte Anwendungsprogramm angezeigt. Die zum Anpassungsraum führende Schaltfläche 86 wird betätigt, um das ausgewählte Anwendungsprogramm an die Anforderungen der Bedienperson des Dienstnutzungsrechners 16 anzupassen. Die dabei auszuführenden Verfahrensschritte werden unten an Hand der Figuren 5A und 5B erläutert.

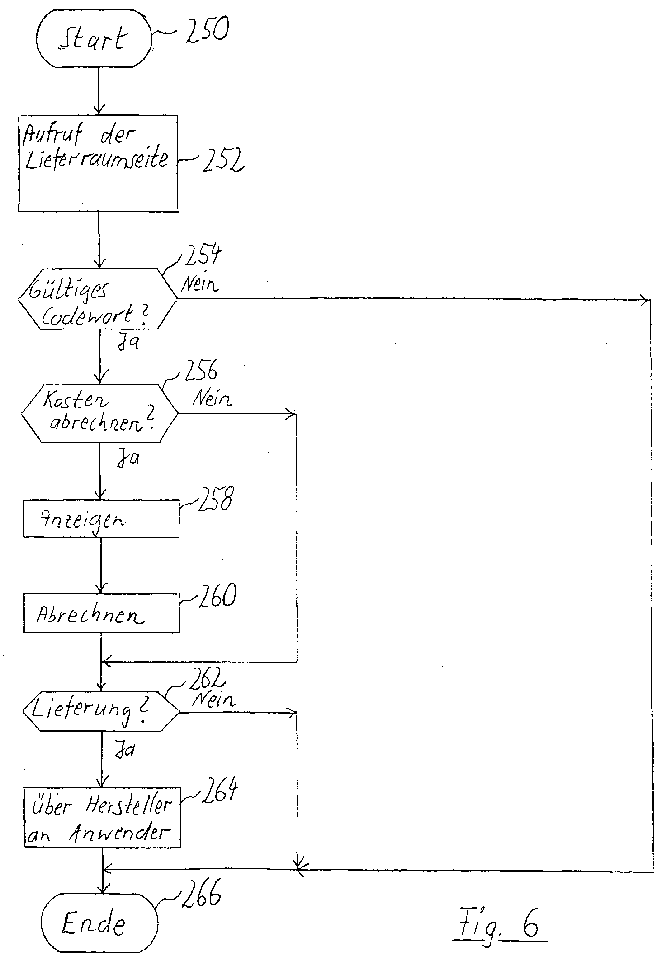

Im Lieferraum, der durch Betätigen der Schaltfläche 88 erreichbar ist, werden die Kosten angezeigt, die bisher durch den Nutzer bei der Anpassung des Programms an seine Anforderungen entstanden sind. Außerdem kann sich der Nutzer im virtuellen Lieferraum zum Kauf der an seine Anforderungen angepaßten Version des ausgewählten Anwendungsprogramms entschließen. Die den Lieferraum betreffenden Verfahrensschritte werden unten an Hand der Figur 6 erläutert.

Die Schaltfläche 90 führt zur Anzeige von Informationen zur besseren Benutzung des ausgewählten Anwendungsprogramms und ist insbesondere für erfahrene und langjährige Benutzer vorgesehen. Über die Schaltfläche 92 lassen sich Daten zum Diensterbringer anzeigen, d.h. hier zum Inhaber der WEB-Seite 50.

Figur 3 zeigt eine Hierarchie 100 zur Auswahl eines Anwendungsprogramms P1 bis Pn. Die Auswahl erfolgt entweder über die Branchenleiste 60, das Betätigen der Schaltfläche 80 für den virtuellen Informationsraum oder das Verwenden einer Suchfunktion. Nach dem Aufruf der WEB-Seite 50, vgl. Figur 2, und eines zugehörigen Programms 102 des Diensterbringers wird in einem Verfahrensschritt 104 eine Branche ausgewählt. Dazu werden beispielsweise die Schaltflächen 62 bis 66 der Branchenleiste 60 verwendet. Betätigt eine Bedienperson die Schaltfläche 80, ohne zuvor eine Schaltfläche 62 bis 66 der Branchenleiste 60 betätigt zu haben, so werden im Informationsfeld 74 Schaltflächen zur Auswahl einer Branche angezeigt. Es sei angenommen, daß die Bedienperson die Schaltfläche 64 für die Branche Medizin betätigt und damit zeigt, daß sie nur an Anwendungsprogrammen für den Bereich Medizin interessiert ist.

In einem folgenden Verfahrensschritt 106 werden im Imformationsfeld 74 Schaltflächen dargestellt, mit deren Hilfe das Anwendungsprogramm P1 für die Krankenhausverwaltung, ein Anwendungsprogramm P3 für eine Arzneimittelverwaltung oder ein Anwendungsprogramm P4 zur Verwaltung von Patientenakten ausgewählt werden können. Es sei angenommen, daß sich die Bedienperson für die Schaltfläche entscheidet, die zum Anwendungsprogramm P1 gehört, d.h. zur Krankenhausverwaltung.

Hat die Bedienperson ein Anwendungsprogramm ausgewählt, so betreffen die Schaltflächen 80 bis 90 nur noch dieses Anwendungsprogramm. In einem Verfahrensschritt 108 wählt die Bedienperson einen bestimmten virtuellen Raum mit Hilfe der Schaltflächen 80 bis 88 aus.

Für die anderen Branchen, z.B. Handel oder Büro gibt es ebenfalls mehrere Anwendungsprogrammen. Für jedes dieser Anwendungsprogramme sind die virtuellen Räume speziell angepaßt, damit die das ausgewählte Anwendungsprogramm betreffenden Verfahrensschritte durchgeführt werden können. Erweitert der Diensterbringer sein Angebot um ein Anwendungsprogramm, so muß er nur einen Ordner mit der Software für die virtuellen Räume in ein neues Verzeichnis kopieren, das dem neuen Anwendungsprogramm zugeordnet ist. Anschließend sind die virtuellen Räume an das neue Anwendungsprogramm anzupassen.

Die Figuren 4A und 4B zeigen bei der Fernnutzung eines Anwendungsprogramms ausgeführte Verfahrensschritte. Das Verfahren beginnt in einem Schritt 150 durch Betätigen der Schaltfläche 82 für den virtuellen Vorführraum, vgl. Figur 2. In einem folgenden Verfahrensschritt 152 wird auf der Anzeigeeinheit des Dienstnutzungsrechners 16 eine Vorführseite dargestellt, die eine Vorführung und den Test des ausgewählten Anwendungsprogramms ermöglicht. In einem Verfahrensschritt 154 läßt sich der Nutzer Funktionen des Anwendungsprogramms vorführen und testet außerdem selbständig Funktionen des ausgewählten Anwendungsprogramms.

Die bei der Beschreibung der Figur 1 erwähnten Programmkomponenten der Firma CITRIX ordnen dem Benutzer einen Speicherbereich und eine Kennummer zu, hier den Speicherbereich 22 und die Kennummer PID1. Der Diensterbringer bemerkt diesen Vorgang aufgrund der Internetverbindung 26 zwischen Diensterbringungsrechner und Rechner 28, vgl. Verfahrensschritt 156. Der Diensterbringer kann an den Dienstnutzungsrechner 16 eine Nachricht senden, z.B. unter Verwendung einer sogenannten Gesprächsbox, englisch Chatbox. Beispielsweise richtet er an die Bedienperson des Dienstnutzungsrechners 16 die Frage "Kann ich Ihnen helfen?". Der Diensterbringer kann auch direkt vom Anwender angewählt werden, z.B. über das Telefonnetz. Nach der Anwahl wird dann gespiegelt.

In einem Verfahrensschritt 158 wird der zukünftige Anwender des Anwendungsprogramms durch den Diensterbringer beraten. Zusätzlich zur Gesprächsbox kann auch ein Fernsprechnetz zur Beratung verwendet werden.

Der Diensterbringer hat kein Spezialwissen über das ausgewählte Anwendungsprogramm und beantwortet daher zunächst die einfachen Fragen des Benutzers. In einem Verfahrensschritt 160 "spiegelt" der Diensterbringer die Internetverbindung 18, um so auf der Anzeigeeinheit des Rechners 28 die gleichen Informationen anzuzeigen, die auch auf der Anzeigeeinheit des Dienstnutzungsrechners 16 dargestellt werden. Dabei ist die Kennummer PID1 anzugeben. Durch die "Spiegelung" muß die Bedienperson des Dienstnutzungsrechners 16 dem Diensterbringer nicht mehr erläutern, was gerade auf der Anzeigeeinheit des Dienstnutzungsrechners 16 dargestellt wird. Der Diensterbringer kann außerdem bei der "Spiegelung" in die Nutzung des Anwendungsprogramms durch den Dienstnutzer eingreifen, um Funktionen des Anwendungsprogramms vorzuführen.

Tritt in einem Verfahrensschritt 162 eine Frage auf, die Spezialwissen zum Anwendungsprogramm erfordert, so wird der zukünftige Anwender vom Diensterbringer an den Hersteller vermittelt. Das Vermitteln erfolgt automatisch durch Anwahl der Internetadresse des Rechners 32. Bei der Vermittlung wird die Kennummer PID1 an den Rechner 32 übergeben. Mit Hilfe der Kennummer PID1 wird die Internetverbindung 18 auch vom Rechner 32 aus "gespiegelt".

In einem Verfahrensschritt 166 unterhalten sich Hersteller und Anwender, dabei wird eine Gesprächsbox oder eine Telefonverbindung verwendet. Das "Spiegeln" zum Rechner 32 erleichtert die Erläuterung durch den Hersteller, da der Hersteller unmittelbar auf seiner Anzeigeeinheit sieht, was auf der Anzeigeeinheit des Anwenders dargestellt wird, vgl. Verfahrensschritt 168. Nach dem Verfahrensschritt 168 folgt ein Verfahrensschritt 170.

Der Verfahrensschritt 170 wird auch unmittelbar nach dem Verfahrensschritt 162 ausgeführt, falls keine Fragen entstehen, deren Beantwortung Spezialwissen voraussetzt. Im Verfahrensschritt 170 muß sich der zukünftige Anwender entscheiden, ob das Programm für seine Zwecke geeignet ist und ob er anwenderspezifische Daten bei einer Fernnutzung an seine Bedürfnisse anpassen will. Soll eine solche Anpassung durchgeführt werden, so erhält der Anwender in einem Verfahrensschritt 172 ein Codewort vom Diensterbringer bzw. vom Hersteller. Anschließend wird das den virtuellen Vorführraum betreffende Verfahren in einem Verfahrensschritt 174 beendet. Soll keine Anpassung von anwenderspezifischen Daten über das Internet 10 erfolgen, so folgt unmittelbar nach dem Verfahrensschritt 170 der Verfahrensschritt 174.

Die Figuren 5A und 5B zeigen ein Flußdiagramm mit Verfahrensschritten, die beim Erstellen von anwenderspezifischen Daten für das ausgewählte Anwendungsprogramm ausgeführt werden. Das Verfahren beginnt in einem Verfahrensschritt 200 mit dem Betätigen der Schaltfläche 86 für den virtuellen Anpassungsraum. In einem folgenden Verfahrensschritt 202 wird auf der Anzeigeeinheit des Dienstnutzungsrechner 16 eine Anpassungsseite dargestellt, die zur Eingabe eines Codewortes auffordert, das zur Anpassung berechtigt. Dieses Codewort stimmt mit dem im Verfahrensschritt 172 übergebenen Codewort überein, vgl. Figur 4B.

In einem Verfahrensschritt 204 wird überprüft, ob ein gültiges Codewort vom Anwender eingegeben worden ist. Ist dies der Fall, so kann der Anwender in einem Verfahrensschritt 206 das Anwendungsprogramm nutzen und an seine Anforderungen anpassen. Insbesondere wird ihm nun durch den Diensterbringer auch ein Zugang zum Datenbank-Rechner 36 ermöglicht, so daß der Anwender eine eigene und umfangreiche Datenbank für seine Zwecke erstellen kann. Wird dagegen im Verfahrensschritt 204 festgestellt, daß kein gültiges Codewort eingegeben worden ist, so folgt unmittelbar nach dem Verfahrensschritt 204 ein unten näher erläuterter Verfahrensschritt 218 zum Beenden des Verfahrens.

In einem dem Verfahrensschritt 206 folgenden Verfahrensschritt 208 gibt der Anwender seine eigenen Stammdaten ein, beispielsweise wird ein Anwender des Krankenhausverwaltungsprogramms die Anzahl von Krankhausbetten in bestimmten Kategorien, die Anzahl und Art von Operationssälen und Formularvorgaben eingeben.

Benötigt der Anwender bei diesen Anpassungen die Hilfe des Herstellers, vgl. Verfahrensschritt 210, so ruft er im Verfahrensschritt 212 einen Applikationsingenieur des Herstellers an. Der Applikationsingenieur "spiegelt" den Anwender vom Rechner 32 aus. Die für das "Spiegeln" erforderlichen Kenndaten entnimmt der Applikationsingenieur der Prozeßinformationsliste des Diensterbringungsrechners. Im Verfahrensschritt 214 kann der Hersteller den Anwender aufgrund des "Spiegelns" optimal bei der Anpassung unterstützen.

Möchte der Anwender weitere Anpassungen durchführen, vgl. Verfahrensschritt 216, so wird das Verfahren im Verfahrensschritt 208 fortgesetzt. Das Verfahren befindet sich in einer Schleife aus den Verfahrensschritten 208 bis 216. Beim Ausführen dieser Schleife werden unter Umständen mehrere Verbindungen zwischen Anwender und Hersteller aufgebaut.

Die Schleife aus den Verfahrensschritten 208 bis 216 wird im Verfahrensschritt 216 erst dann verlassen, wenn der Anwender vorerst keine Anpassungen mehr durchführen möchte. In diesem Fall wird das Verfahren in einem Verfahrensschritt 218 beendet, wobei zur WEB-Seite 50 zurückgekehrt wird, d.h. daß die WEB-Seite 50 auf der Anzeigeeinheit des Dienstnutzungsrechners 16 dargestellt wird. Die vom Anwender bisher eingegebenen Anpassungen und Änderungen werden in der Speichereinheit 14 des Diensterbringungsrechners 12 und in der Datenbank des Datenbank-Rechners 36 gespeichert.

Figur 6 zeigt ein Flußdiagramm mit Verfahrensschritten, die bei der Auslieferung des Anwendungsprogramms ausgeführt werden. Das Verfahren beginnt in einem Verfahrensschritt 250 mit dem Betätigen der Schaltfläche 88 für den Aufruf des virtuellen Lieferraumes. In einem folgenden Verfahrensschritt 252 wird der virtuelle Lieferraum auf der Anzeigeeinheit des Dienstnutzungsrechners 16 dargestellt. Die dargestellte Seite fordert zur Eingabe eines Codewortes auf, das zur Abfrage von Kosten und zum Veranlassen von Lieferungen berechtigt.

In einem Verfahrensschritt 254 wird überprüft, ob ein gültiges Codewort eingegeben worden ist. Wurde kein gültiges Codewort eingegeben, so wird der Zutritt zum virtuellen Lieferraum verweigert und das Verfahren wird in einem Verfahrensschritt 266 beendet, der unten noch näher erläutert wird. Wird dagegen ein Codewort eingegeben, das mit dem im Verfahrensschritt 172 übergebenen Codewort übereinstimmt, so folgt unmittelbar nach dem Verfahrensschritt 254 ein Verfahrensschritt 256.

Im Verfahrensschritt 254 wird der Anwender gefragt, ob er bisher bei der Anpassung entstandene Kosten abrechnen möchte. Sollen Kosten angezeigt oder abgerechnet werden, so folgt unmittelbar nach dem Verfahrensschritt 256 ein Verfahrensschritt 258, in dem die Kosten angezeigt werden. In einem folgenden Verfahrensschritt 260 kann der Anwender die Abrechnung der bisher entstandenen Kosten veranlassen. Anschließend wird ein Verfahrensschritt 262 ausgeführt. Wird dagegen im Verfahrensschritt 256 festgestellt, daß der Anwender vorerst keine Kosten abrechnen möchte, so folgt unmittelbar nach dem Verfahrensschritt 256 ein Verfahrensschritt 262.

Im Verfahrensschritt 262 wird der Anwender gefragt, ob er die Lieferung des ausgewählten Anwendungsprogramms und der anwenderspezifischen Daten veranlassen möchte. Soll die Lieferung veranlaßt werden, so wird in einem Verfahrensschritt 264 die Übertragung des Anwendungsprogramms und der anwenderspezifischen Daten über die Internetverbindung 18, vgl. Figur 1, veranlaßt. Der Anwender erhält somit ein Produkt, das bereits an seine Anforderungen angepaßt ist und von dem er sicher weiß, daß es seine Anforderungen erfüllt.

Anschließend wird das Verfahren in einem Verfahrensschritt 266 beendet. Auf der Anzeigeeinheit des Dienstnutzungsrechners 16 erscheint wieder die WEB-Seite 50.

Bei bekannten Verfahren der Einführung eines Anwendungsprogramms werden verschiedene Phasen in der folgenden Reihenfolge durchgeführt:
a) Auswahl des Anwendungsprogramms,
b) Beschaffung des Anwendungsprogramms und Installation beim Anwender,
c) Lieferung des an die Anforderungen des Anwenders angepaßten Anwendungsprogramms einschließlich Datenbank sowie Installation,
d) Schulung der Bedienpersonen des Anwenders,
e) Anpassung des Anwendungsprogramms an die Anforderungen des Anwenders, insbesondere Erstellen einer eigenen Datenbank,
f) Abschluß der Startphase, z.B. durch eine Abnahme,
g) Nutzung des Anwendungsprogramms durch den Anwender für die Bedürfnisse seines Betriebes, und
h) Pflege und Wartung des Anwendungsprogramms.

Durch den Einsatz des erfindungsgemäßen Verfahrens werden die Verfahrensschritte in einer anderen Reihenfolge durchgeführt:
a) Auswahl des Anwendungsprogramms (a),
b) Schulung des Bedienpersonals (d),
c) Anpassung des Anwendungsprogramms und Erstellen der anwenderspezifischen Daten (e),
d) Abschluß der Startphase, z.B. durch eine Abnahme (f),
e) Beschaffung einer geeigneten Hardware (b),
f) Lieferung des an die Anforderungen des Anwenders angepaßten Anwendungsprogramms einschließlich Datenbank sowie Installation (c),
g) Nutzung des Anwendungsprogramms durch den Anwender für die Bedürfnisse des eigenen Betriebes (g), und
h) Pflege und Wartung des Anwendungsprogramms (h).

In Klammern wurde die Stellung der jeweiligen Phase bei bekannten Verfahren angegeben. Durch den Einsatz des erfindungsgemäßen Verfahrens wird die Beschaffung der Hardware auf einen späteren Zeitpunkt verschoben. Dies führt dazu, daß der Anwender letztlich mit einer moderneren Hardware arbeiten kann. Außerdem wird durch das erfindungsgemäße Verfahren erreicht, daß der Anwender vor größeren Aufwendungen geschützt wird, wenn sich bei der Anpassung herausstellt, daß das Anwendungsprogramm doch nicht für seine Zwecke geeignet ist.

### Bezugszeichenliste

- 10: Internet
- P1 bis Pn: Anwendungsprogramm
- 12: Diensterbringungsrechner (Anwendungs-Server)
- 14: Speichereinheit
- BS: Betriebssystem
- 16: Dienstnutzungsrechner
- 18: Internetverbindung
- 20: Datensichtprogramm
- ICA: spezielles schmalbandiges Protokoll
- B1, B2: Benutzer
- 22, 24: Speicherbereich
- PID1, PID2: Kennummer
- 26: Internetverbindung
- 28: Rechner
- 30: Internetverbindung
- 32: Rechner
- 34: Internetverbindung
- 36: Datenbank-Rechner
- 50: WEB-Seite
- 52: Adreßleiste
- 54: Titelleiste
- 55: Titelfeld
- 56: Verkleinerungsfeld
- 58: Schließenfeld
- 60: Branchenauswahlleiste
- 62, 64, 66: Schaltfläche
- 68: Punkte
- 70: Statusleiste
- 72: Raumauswahlfeld
- 74: Informationsfeld
- 80 bis 92: Schaltfläche
- 96: Punkte
- 98: vertikale Bildlaufleiste
- 100: Hierarchie zur Auswahl
- 102: zur WEB-Seite gehörendes Programm
- 104: Welche Branche?
- 106: Welches Anwendungsprogramm?
- 108: Welcher virtueller Raum?
- 150: Start
- 152: Aufruf der Vorführseite
- 154: Vorführung und Test
- 156: Registrierung
- 158: Beratung durch Diensterbringer über Telefon oder Internet
- 160: Spiegelung der Daten und Aktionen
- 162: Spezialist erforderlich?
- 164: Übergabe
- 166: Dialog zwischen Anwender und Hersteller
- 168: Spiegelung
- 170: Soll Freischaltung erfolgen?
- 172: Codewort über Hersteller an Anwender
- 174: Ende
- 200: Start
- 202: Aufruf der Anpassungsseite
- 204: Gültiges Codewort?
- 206: Aufruf des Anwendungsprogramms mit eigener Datenbank
- 208: Eingeben der Stammdaten + Anpassungen
- 210: Wird Hilfe benötigt?
- 212: Anruf
- 214: Spiegeln
- 216: Weitere Eingaben und Anpassungen?
- 218: Ende
- 250: Start
- 252: Aufruf der Lieferraumseite
- 254: Gültiges Codewort?
- 256: Kosten abrechnen?
- 258: Anzeigen
- 260: Abrechnen
- 262: Lieferung?
- 264: über Hersteller an Anwender
- 266: Ende

## Patentansprüche

1. Verfahren zum Vermitteln von Prozeßdaten,
bei dem von einem Anwenderrechner (16) aus veranlaßt ein im Speicher (14) eines Programmrechners (12) gespeichertes Programm (P1) durch mindestens einen Prozessor in einem Prozeß ausgeführt wird, der mit Hilfe einer Prozeßnummer (PID1) von anderen durch den Prozessor ausgeführten Prozessen unterscheidbar ist,
unter Einbeziehung der Prozeßnummer (PID1) in Zusammenhang mit der Ausführung des Programms (P1) stehende Daten zwischen dem Anwenderrechner (16) und dem Programmrechner (12) und zwischen dem Programmrechner (12) und einer ersten Schnittstelle (28) zur Datenein- und Datenausgabe übertragen werden,
von der ersten Schnittstelle aus veranlaßt wird, daß die Prozeßnummer (PID1) oder Daten zum Ermitteln der Prozeßnummer (PID1) zu einer zweiten Schnittstelle (32) übertragen werden (Schritt 164),
und bei dem mit Hilfe der Prozeßnummer (PID1) im Zusammenhang mit der Ausführung des Programms (P1) stehende Daten zwischen dem Programmrechner (12) und der zweiten Schnittstelle (32) übertragen werden (Schritt 168).

2. Verfahren nach Anspruch 1, **dadurch gekennzeichnet, daß** die erste Schnittstelle (28) und/oder die zweite Schnittstelle (32) in Fernrechnern (28, 32) enthalten sind, die mit dem Programmrechner (12) über ein Datenübertragungsnetz (10) oder Datenfernübertragungsnetz verbunden sind.

3. Verfahren nach Anspruch 1 oder 2, **dadurch gekennzeichnet, daß** das Programm (P1) ein Programm ist, das von einem Anwender von der ersten Schnittstelle (28) aus genutzt wird.

4. Verfahren nach Anspruch 1 oder 2, **dadurch gekennzeichnet, daß** das Programm (P1) ein Programm ist, das von einem Anwender von einer Anwenderschnittstelle (16) aus gesteuert wird.

5. Verfahren nach Anspruch 4, **dadurch gekennzeichnet, daß** die zweite Schnittstelle (32) eine Schnittstelle des Herstellers des Programms (P1) ist.

6. Verfahren nach Anspruch 5, **dadurch gekennzeichnet, daß** im Speicher (14) des Programmrechners (12) verschiedene Programme (P1, P2) ausgeführt werden,
daß abhängig von einem durch die Prozeßnummer (PID1, PID2) betroffenem Programm (P1, P2) von der ersten Schnittstelle (28) aus das Übertragen der Prozeßnummer (PID1, PID2) oder der Daten zum Ermitteln der Prozeßnummer (PID1, PID2) an Schnittstellen (32) verschiedener Hersteller veranlaßt wird.

7. Verfahren nach einem der Ansprüche 4 bis 6, **dadurch gekennzeichnet, daß** die Anwenderschnittstelle (16) in einem Anwenderrechner (16) enthalten ist, der über ein Datenübertragungsnetz (10) oder Datenfernübertragungsnetz (10) mit dem Programmrechner (12) verbunden ist.

8. Verfahren nach einem der Ansprüche 4 oder 5, **dadurch gekennzeichnet, daß** zur ersten Schnittstelle (28) und/oder zur zweiten Schnittstelle (32) die gleichen Daten übertragen werden wie zwischen dem Programmrechner (12) und der vom Anwender genutzten Schnittstelle.

9. Verfahren nach einem der vorhergehenden Ansprüche, **dadurch gekennzeichnet, daß** die Prozeßnummer (PID1) oder die Daten zum Ermitteln der Prozeßnummer (PID1) zur ersten Schnittstelle (28) übermittelt werden,
und daß die übermittelte Prozeßnummer (PID1) oder die übermittelten Daten zur Ermittlung der Prozeßnummer (PID1) von der ersten Schnittstelle (28) zur zweiten Schnittstelle (32) übermittelt werden.

10. Verfahren nach Anspruch 9, **dadurch gekennzeichnet, daß** die Prozeßnummer (PID1) oder die zur Ermittlung der Prozeßnummer (PID1) dienenden Daten über ein Datenübertragungsnetz (10), ein Datenfernübertragungsnetz (10) oder über ein Fernsprechnetz übermittelt werden.

11. Verfahren nach einem der vorhergehenden Ansprüche, **dadurch gekennzeichnet, daß** der Anwender in einer Startphase anwenderspezifische Programmteile des Programms oder Teil einer für die Nutzung des Programms erforderlichen anwenderspezifischen Datenbank eingibt, ohne daß er uneingeschränkt Zugriff auf die Befehle des Anwendungsprogramms (P1) hat,
und daß der Anwender nach Abschluß der Startphase uneingeschränkt Zugriff auf die Befehle des Anwendungsprogramms (P1) erhält.

12. Verfahren nach einem der vorhergehenden Ansprüche, **dadurch gekennzeichnet, dass** das Programm als ein Anwendungsprogramm (P1) im Speicher (14) eines Rechners (12) gespeichert wird,
dass ein Anwender von einem entfernten Dienstnutzungsrechner (16) aus über ein Datenübertragungsnetz (10) Funktionen des Anwendungsprogramms (P1) nutzt,
dass der Anwender in einer Startphase anwenderspezifische Programmteile des Anwendungsprogramms (P1) oder eine für die Nutzung des Programms erforderliche anwenderspezifische Datenbank eingibt, ohne daß er uneingeschränkten Zugriff auf die Befehle des Anwendungsprogramms (P1) hat,
und daß der Anwender nach Abschluß der Startphase uneingeschränkten Zugriff auf die Befehle des Anwendungsprogramms (P1) erhält.

13. Verfahren nach Anspruch 12, **dadurch gekennzeichnet, daß** die anwenderspezifischen Daten nach der Startphase auf einem anderen Rechner (16) gespeichert und genutzt werden.

14. Verfahren nach Anspruch 12 oder 13, **dadurch gekennzeichnet, daß** die Fernnutzung der Funktionen durch den Anwender auf einem Rechner (28) eines Diensterbringers, der die Fernnutzung des Anwendungsprogramms (P1) anbietet, oder auf einem Rechner (32) des Herstellers des Anwendungsprogramms (P1) angezeigt wird.

15. Verfahren nach Anspruch 14, **dadurch gekennzeichnet, daß** zwischen dem Anwender und dem Diensterbringer und/oder zwischen dem Anwender und dem Hersteller über das Datenübertragungsnetz (10) oder über ein anderes Datenübertragungsnetz Nachrichten ausgetauscht werden, welche die Nutzung der Funktionen und/oder das Anpassen unterstützen (Schritte 158, 166,212).

16. Verfahren nach Anspruch 14 oder 15, **dadurch gekennzeichnet, daß** während der Fernnutzung eine Verbindung zur Übertragung der Nachrichten und/oder zum Anzeigen der Fernnutzung zunächst zwischen Anwender und Diensterbringer und erst danach zwischen Anwender und Hersteller aufgebaut wird.

17. Verfahren nach Anspruch 16, **dadurch gekennzeichnet, daß** der Diensterbringer den Anwender an den Hersteller vermittelt (Schritt 164),
und daß beim Vermitteln eine Prozeßnummer (PID1) übergeben wird, mit deren Hilfe sich die vom Anwender genutzten Funktionen auf dem Rechner (28) des Diensterbringers und/oder auf dem Rechner (32) des Herstellers anzeigen lassen.

18. Verfahren nach einem der Ansprüche 12 bis 17, **dadurch gekennzeichnet, daß** im Speicher (14) des Rechners (12) Anwendungsprogramme (P1 bis Pn) für verschiedene Anwendungen und insbesondere von verschiedenen Herstellern gespeichert werden.

19. Anwenderspezifische Daten, die Teil einer Befehlsfolge eines Anwendungsprogramms (P1) oder die Teil einer von einem Anwendungsprogramm (P1) genutzten Datenbank sind, **dadurch gekennzeichnet, daß** zum Erstellen der anwenderspezifischen Daten ein Verfahren nach einem der Ansprüche 12 bis 18 verwendet worden ist.

## Claims

1. A method for transmitting process data,
wherein a program (P1) stored in the memory (14) of a program computer (12) and caused by a user computer (16) is executed by at least one processor in a process which is distinguishable from other processes executed by this processor by means of a process number (PID1),
taking the process number (PID1) into account, data related to the execution of the program (P1) are transmitted between the user computer (16) and the program computer (12), and between the program computer (12) and a first interface (28) for the data input and data output,
it is caused by the first interface that the process number (PID1) or data for determining the process number (PID1) are transmitted to a second interface (32) (step 164),
and wherein by means of the process number (PID1) data related to the execution of the program (P1) are transmitted between the program computer (12) and the second interface (32) (step 168).

2. A method according to claim 1, **characterized in that** the first interface (28) and/or the second interface (32) are included in remote computers (28, 32) which are connected to the program computer (12) via a data communications network (10) or a data telecommunications network.

3. A method according to claim 1 or 2, **characterized in that** the program (P1) is a program which is used by a user from the first interface (28).

4. A method according to claim 1 or 2, **characterized in that** the program (P1) is a program which is controlled by a user from a user interface (16).

5. A method according to claim 4, **characterized in that** the second interface (32) is an interface of the manufacturer of the program (P1).

6. A method according to claim 5, **characterized in that** in the memory (14) of the program computer (12) several programs (P1, P2) are executed,
that dependent on a program (P1, P2) concerned by the process number (PID1, PID2), the transfer of the process number (PID1, PID2) or of the data for determining the process number (PID1, PID2) from the first interface (28) to interfaces (32) of different manufacturers is caused.

7. A method according to one of the claims 4 to 6, **characterized in that** the user interface (16) is included in a user computer (16) which is connected to the program computer (12) via a data communications network (10) or a data telecommunications network (10).

8. A method according to one of the claims 4 or 5, **characterized in that** the same data which are transferred between the program computer (12) and the interface used by the user are transferred to the first interface (28) and/or the second interface (32).

9. A method according to one of the preceding claims, **characterized in that** the process number (PID1) or the data for determining the process number (PID1) are transferred to the first interface (28),
and that the transferred process number (PID1) or the transferred data for determining the process number (PID1) are transferred from the first interface (28) to the second interface (32).

10. A method according to claim 9, **characterized in that** the process number (PID1) or the data for determining the process number (PID1) are transferred via a data communications network (10), a data telecommunications network (10) or via a telephone network.

11. A method according to one of the preceding claims, **characterized in that** in a starting phase the user inputs user-specific program parts of the program or part of a user-specific database required for using the program without having unrestricted access to the instructions of the application program (P1),
and that the user gets unrestricted access to the instructions of the application program (P1) after termination of the starting phase.

12. A method according to one of the preceding claims, **characterized in that** the program is stored in the memory (14) of a computer (12) as an application program (P1),
that a user uses functions of the application program (P1) from a remote service use computer (16) via a data communications network (10),
that the user inputs in a starting phase user-specific program parts of the application program (P1) or a user-specific database required for the use of the program without having unrestricted access to the instructions of the application program (P1),
and that the user gets unrestricted access to the instructions of the application program (P1) after termination of the starting phase.

13. A method according to claim 12, **characterized in that** after the starting phase the user-specific data are stored and used on another computer (16).

14. A method according to claim 12 or 13, **characterized in that** the remote use of the functions by the user is displayed in a computer (28) of a service provider offering the remote use of the application program (P1), or in the computer (32) of the manufacturer of the application program (P1).

15. A method according to claim 14, **characterized in that** between the user and the service provider and/or between the user and the manufacturer messages are exchanged via the data communications network (10) or via another data communications network, which messages support the use of the functions and/or the adaptation (steps 158, 166, 212).

16. A method according to claim 14 or 15, **characterized in that** during the remote use a connection for the transfer of the messages and/or for the display of the remote use is first set up between the user and the service provider and only afterwards between the user and the manufacturer.

17. A method according to claim 16, **characterized in that** the service provider generates the contact between the user and the manufacturer (step 164),
and that during the generation of the contact a process number (PID1) is passed on, by means of which the functions used by the user can be displayed in the computer (28) of the service provider and/or in the computer (32) of the manufacturer.

18. A method according to one of the claims 12 to 17, **characterized in that** application programs (P1 to Pn) for various applications and in particular of various manufacturers are stored in the memory (14) of the computer (12).

19. User-specific data which are part of an instruction sequence of an application program (P1) or which are part of a database used by an application program (P1), **characterized in that** a method according to one of the claims 12 to 18 has been used for creating the user-specific data.

## Revendications

1. Méthode de transmission de données de processus,
dans laquelle, incité à partir d'un ordinateur (16) d'un utilisateur, un programme (P1) mémorisé dans une mémoire (14) d'un ordinateur de programme (12) est exécuté dans un processus par au moins un processeur, le processus étant distinguable d'autre processus exécutés par le processeur à l'aide d'un numéro de processus (PID1),
considérant le numéro de processus (PID1), des données relatives à l'exécution du programme (P1) sont transmises entre l'ordinateur utilisateur (16) et l'ordinateur de programme (12) et entre l'ordinateur de programme (12) et une première interface (28) pour l'entrée et sortie de données,
à partir de la première interface, la transmission du numéro de processus (PID1) ou des données pour déterminer le numéro de processus (PID1) à une deuxième interface (32) est incitée (étape 164),
et dans laquelle à l'aide du numéro de processus (PID1) des données relatives à l'exécution du programme (P1) sont transmises entre l'ordinateur de programme (12) et la deuxième interface (32) (étape 168).

2. Méthode selon la revendication 1, **caractérisée en ce que** la première interface (28) et/ou la deuxième interface (32) sont incluses dans des ordinateurs à distance (28, 32) connectés à l' ordinateur de programme (12) par un réseau de transmission de données (10) ou un réseau de transmission de données à distance.

3. Méthode selon la revendication 1 ou 2, **caractérisée en ce que** le programme (P1) est un programme utilisé par un utilisateur à partir de la première interface (28).

4. Méthode selon la revendication 1 ou 2, **caractérisée en ce que** le programme est un programme contrôlé par un utilisateur à partir d'une interface utilisateur (16).

5. Méthode selon la revendication 4, **caractérisée en ce que** la deuxième interface (32) est une interface du fabricant du programme (P1).

6. Méthode selon la revendication 5, **caractérisée en ce que** dans la mémoire (14) de l'ordinateur de programme (12) des plusieurs programmes (P1, P2) sont exécutes,
**en ce que**, en fonction d'un programme (P1, P2) concerné par le numéro de processus (PID1, PID2), à partir de la première interface (28) la transmission du numéro du processus (PID1, PID2) ou des données pour déterminer le numéro du processus (PID1, PID2) à des interfaces (32) des différents fabricateurs est incitée.

7. Méthode selon l'une des revendications 4 à 6, **caractérisée en ce que** l'interface utilisateur (16) est incluse dans un ordinateur utilisateur (16) connecté à l' ordinateur de programme (12) par un réseau de transmission de données (10) ou un réseau de transmission de données à distance (10).

8. Méthode selon l'une des revendications 4 ou 5, **caractérisée en ce qu'**à la première interface (28) et/ou la deuxième interface (32) les mêmes données sont transmises qu'entre l'ordinateur de programme (12) et l'interface utilisée par l'utilisateur.

9. Méthode selon l'une des revendications précédentes, **caractérisée en ce que** le numéro de processus (PID1) ou les données pour déterminer le numéro de processus (PID1) sont transmis à la première interface (28),
et **en ce que** le numéro de processus (PID1) transmis ou les données pour déterminer le numéro de processus (PID1) transmises sont transmis de la première interface (28) à la deuxième interface (32).

10. Méthode selon la revendication 9, **caractérisée en ce que** le numéro de processus (PID1) ou le données servant à déterminer le numéro de processus (PID1) sont transmis par un réseau de transmission de données (10), un réseau de transmission de données à distance (10) ou un réseau téléphonique.

11. Méthode selon l'une des revendications précédentes, **caractérisée en ce que** dans une phase de démarrage, l'utilisateur introduit des parties de programme du programme ou une partie d'une banque de données spécifique de l'utilisateur et requise pour l'utilisation du programme sans qu'il ait accès illimité sur les commandes du programme d'utilisation (P1),
et **en ce que** la phase de démarrage étant terminée, l'utilisateur a accès illimité sur les commandes du programme d'utilisation (P1).

12. Méthode selon l'une des revendications précédentes, **caractérisée en ce que** le programme est mémorisé comme un programme d'utilisation (P1) dans la mémoire (14) d'un ordinateur (12),
**en ce que**, par un réseau de transmission de données (10), un utilisateur utilise des fonctions du programme d'utilisation (P1) à partir d'un ordinateur d'utilisation de service à distance (16),
**en ce que**, dans une phase de démarrage, l'utilisateur introduit des parties de programme du programme d'utilisation (P1) ou une banque de données spécifique de l'utilisateur et requise pour l'utilisation du programme sans qu'il ait accès illimité sur les commandes du programme d'utilisation (P1),
et **en ce que** la phase de démarrage étant terminée, l'utilisateur obtient accès illimité sur les commandes du programme d'utilisation (P1).

13. Méthode selon la revendication 12, **caractérisée en ce que** la phase de démarrage étant terminée, les données spécifiques sont mémorisées et utilisées sur un autre ordinateur (16).

14. Méthode selon la revendication 12 ou 13, **caractérisée en ce que** l'utilisation à distance des fonctions par l'utilisateur est indiquée sur un ordinateur (28) d'un prestataire de service offrant l'utilisation à distance du programme d'utilisation (P1), ou sur un ordinateur (32) du fabricant du programme d'utilisation (P1).

15. Méthode selon la revendication 14, **caractérisée en ce qu'**entre l'utilisateur et le prestataire de service et/ou entre l'utilisateur et le fabricant des informations sont échangées par le réseau de transmission de données (10) ou par un autre réseau de transmission de données (10), lesdites informations soutenant l'utilisation des fonctions et/ou l'adaptation (étapes 158, 166, 212).

16. Méthode selon la revendication 14 ou 15, **caractérisée en ce que**, pendant l'utilisation à distance, une communication est établie servant à la transmission des informations et/ou à l'indication de l'utilisation à distance d'abord entre l'utilisateur et le prestataire de service et seulement ensuite entre l'utilisateur et le fabricant.

17. Méthode selon la revendication 16, **caractérisée en ce que** le prestataire de service met le fabricant en contact avec l'utilisateur (étape 164),
et **en ce qu'**en établir ce contact, un numéro de processus (PID1) est délivré à l'aide duquel les fonctions utilisées par l'utilisateur peuvent être indiquées sur l'ordinateur (28) du prestataire de service et/ou sur l'ordinateur (32) du fabricant:

18. Méthode selon l'une des revendications 12 à 17, **caractérisée en ce que** dans la mémoire (14) de l'ordinateur (12) des programmes d'utilisations (P1 à Pn) pour des différentes applications et en particulier des différents fabricants sont mémorisés.

19. Des données spécifiques d'un utilisateur qui forment partie d'une séquence des commandes d'un programme d'utilisation (P1) ou qui sont une partie d'une banque de données utilisée par un programme d'utilisation (P1), **caractérisée en ce que** pour établir les données spécifiques de l'utilisateur une méthode selon l'une des revendications 12 à 18 a été utilisée.
